# EUROPEAN PATENT APPLICATION

(11) **EP 4 610 097 A1**
(43) Date of publication of application: **03.09.2025**
(21) Application number: 25154224.7
(22) Date of filing: 27.01.2025
(51) Int. Cl.: B60L 53/30, B60L 53/80, B60L 58/27, H01M 10/615, H01M 10/633, H02J 7/00

(54) **BATTERY REPLACING SYSTEM**

(30) Priority: 27.02.2024 JP 2024027262
(71) Applicant: TOYOTA JIDOSHA KABUSHIKI KAISHA, Aichi-ken, 471-8571 (JP)
(72) Inventor: MIGITA, Tsubasa, Toyota-shi, 471-8571 (JP); ICHIKAWA, Shinji, Toyota-shi, 471-8571 (JP); MATSUSHITA, Taro, Toyota-shi, 471-8571 (JP); KURODA, Yasuhiro, Toyota-shi, 471-8571 (JP); ITO, Shuta, Toyota-shi, 471-8571 (JP); UOTANI, Akio, Toyota-shi, 471-8571 (JP)
(74) Representative: D Young & Co LLP

(57) **Abstract**

A battery replacing system (100) includes: a battery replacing apparatus (10) including at least one battery pack (101) replaceable with a battery pack (201) mounted on a vehicle (200); a heater (30) that raises a temperature of the battery pack (101); and a controller (20). The controller (20) sets a start-of-raising-temperature time (11), at which the heater (30) starts raising the temperature of the battery pack (101), based on usage status information of the battery replacing apparatus (10) and information regarding an outdoor air temperature.

## Description

### CROSS REFERENCE TO RELATED APPLICATIONS

This nonprovisional application is based on Japanese Patent Application No. 2024-027262 filed on February 27, 2024 with the Japan Patent Office, the entire content of which is hereby incorporated by reference.

### BACKGROUND

### Field

The present disclosure relates to a battery replacing system.

### Description of the Background Art

Japanese Patent Laying-Open No. 2018-160364 discloses a battery management system for managing mobile batteries that are available for user for rental purposes. The battery management system determines when to charge a mobile battery, etc., based on a predicted demand or availability of the mobile battery.

### SUMMARY

In Japanese Patent Laying-Open No. 2018-160364, while when to charge a mobile battery is set based on a predicted demand or availability of the mobile battery, raising the temperature of the mobile battery and its timing are not taken into account. As the temperature of the mobile battery is raised too sooner than when the mobile battery is lent out to a user, the mobile battery is at a high temperature for an extended period of time, which may deteriorate the mobile battery.

The present disclosure is made to solve the above problem, and an object of the present disclosure is to provide a battery replacing system which can inhibit the deterioration of a spare battery.

A battery replacing system according to one aspect of the present disclosure includes: a battery replacing apparatus including at least one spare battery replaceable with a vehicle battery mounted on the vehicle; a heater that raises a temperature of the at least one spare battery; and at least one controller. Any one of the at least one controller sets a first time at which the heater starts raising the temperature of the at least one spare battery, based on usage status information of the battery replacing apparatus and information regarding an outdoor air temperature.

The battery replacing system according to one aspect of the present disclosure sets a first time at which the heater starts raising the temperature of the at least one spare battery, based on usage status information of the battery replacing apparatus and information regarding an outdoor air temperature, as noted above. This allows the first time to be set based on the usage status information of the battery replacing apparatus, thereby inhibiting the temperature of the spare battery from being raised too sooner than when the battery replacement is conducted. The first time being set based on the outdoor-air-temperature information can also inhibit the temperature of the spare battery from reaching the set temperature too soon, due to the outdoor air temperature being high, for example. As a result of these, a time period can be inhibited from extending during which the spare battery is at a high temperature. This can inhibit deterioration of the spare battery.

The any one of the at least one controller may set the first time so that higher a congestion level of the battery replacing apparatus is, sooner the heater starts raising the temperature, and higher the outdoor air temperature is, later the heater starts raising the temperature. Such a configuration can inhibit the temperature of the spare battery from being raised sooner when the battery replacing apparatus is not congested and the demand for the spare battery is low. This can also inhibit the temperature of the spare battery from being raised sooner when the temperature of the spare battery is expected to reach the set temperature sooner due to the outdoor air temperature being high. As a result of these, a time period can be readily inhibited from extending during which the spare battery is at a high temperature.

The battery replacing system may further include a charger that charges the at least one spare battery. The any one of the at least one controller sets a second time at which the charger starts charging the at least one spare battery, based on the usage status information of the battery replacing apparatus. Such a configuration can inhibit the spare battery from being charged too sooner than when the battery replacement is conducted. As a result, a time period can be inhibited from extending during which a state of charge (SOC) of the spare battery is high. This can more effectively inhibit deterioration of the spare battery.

The any one of the at least one controller may change a method of charging by the charger from normal charging to fast charging, based on the usage status information of the battery replacing apparatus. The any one of the at least one controller sets the second time based on the method of charging. Such a configuration allows the second time to be set appropriately, based on the charging method (charge rate). As a result, a time period can be better inhibited from extending during which the SOC of the spare battery is high.

The any one of the at least one controller may set the first time and the second time so that the heater raises the temperature sooner than when the charger charges the at least one spare battery. Such a configuration can inhibit the spare battery from being charged while the temperature is high. As a result, the charging efficiency of the spare battery can be inhibited from decreasing.

The at least one spare battery may include a plurality of spare batteries. The any one of the at least one controller may set a number of spare batteries to set the first time for among the plurality of spare batteries, based on the usage status information of the battery replacing apparatus. Such a configuration allows the number of spare batteries to which the first time is set can be changed as appropriate, in accordance with the status of usage of the battery replacing apparatus, thereby allowing the power consumption by the heater to be readily adjusted in accordance with the status of usage of the battery replacing apparatus.

When a total number of the plurality of spare batteries is greater than a predetermined number, the any one of the at least one controller may set the first time for some of the plurality of spare batteries, based on the usage status information of the battery replacing apparatus. Such a configuration can reduce the processing load on the at least one controller, as compared to setting the first time for all spare batteries.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a configuration of a battery replacing system according to one embodiment.
Fig. 2 is a sequence diagram showing a control of the battery replacing system according to the embodiment.
Fig. 3 is a diagram illustrating one example of step S4 of Fig. 2.
Fig. 4 is a diagram illustrating one example of step S6 of Fig. 2.
Fig. 5 is a diagram illustrating one example of a table used in step S6 of Fig. 2.
Fig. 6 is a diagram illustrating one example of step S10 of Fig. 2.
Fig. 7 is a diagram showing a method of setting a start-of-raising-temperature time in the battery replacing system according to a variation of the embodiment.

### DESCRIPTION OF THE PREFERRED EMBODIMENTS

In the following, an embodiment according to the present disclosure will be described in detail, with reference to the accompanying drawings. In the figures, the same reference sign is used to refer to the same or like parts, and the description thereof will not be repeated.

### <Configuration of Battery Replacing System>

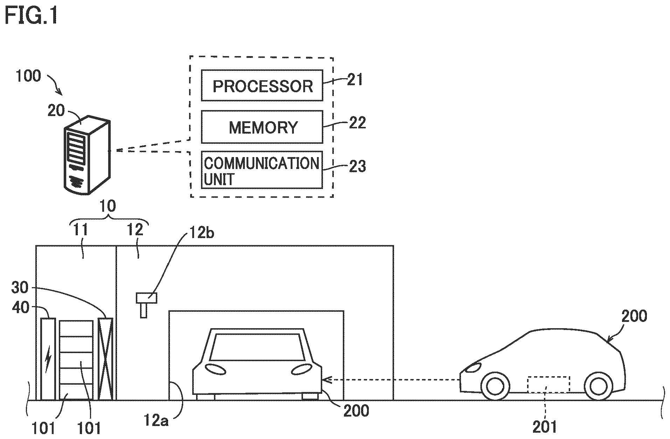

Fig. 1 is a diagram showing a configuration of a battery replacing system 100 according to the present embodiment. Battery replacing system 100 is a system for replacing a battery pack 201 mounted on a vehicle 200 with a battery pack 101 described below. Note that the battery pack 101 and battery pack 201 are one example of a "spare battery" and a "vehicle battery," respectively, according to the present disclosure.

Battery pack 201 stores power for driving vehicle 200, for example. Vehicle 200 is, for example, a plug-in hybrid electric vehicle (PHEV), a battery electric vehicle (BEV), or a fuel cell electric vehicle (FCEV).

Battery replacing system 100 includes a battery replacing apparatus 10, a controller 20, a heater 30, and a charger 40.

Battery replacing apparatus 10 includes a shed 11 and a battery replacing apparatus body 12. As shown in Fig. 1, shed 11 and battery replacing apparatus body 12 are co-located.

Battery replacing apparatus 10 includes at least one battery pack 101 that is replaceable with battery pack 201 of vehicle 200. Shed 11 can store multiple battery packs 101.

Battery replacing apparatus body 12 replaces battery pack 201 of vehicle 200 with any one of battery packs 101 stored in shed 11. Battery replacing apparatus body 12 has an entrance 12a through which the vehicle 200 goes in and out. Note that the battery replacing apparatus body 12 includes multiple devices (jigs) not shown, which are used for battery replacement.

Battery replacing apparatus 10 (e.g., battery replacing apparatus body 12) includes a camera 12b. Camera 12b captures an image of a vehicle (e.g., a vehicle waiting for battery replacement) around battery replacing apparatus body 12. Note that the battery replacing apparatus 10 may not include camera 12b.

Controller 20 manages various controls at battery replacing system 100. Controller 20 may be provided inside the battery replacing apparatus 10 or at a different location than battery replacing apparatus 10.

Controller 20 includes a processor 21, a memory 22, and a communication unit 23. Processor 21 generates command signals for controlling battery replacing apparatus 10, heater 30, and charger 40, etc., for example. The command signals may be transmitted to the respective devices through communication unit 23, for example.

Besides the programs for execution by processor 21, memory 22 stores information (e.g., maps, mathematical formulas, and various parameters) which are used in the programs. For example, memory 22 stores information on availability of battery replacing apparatus 10, information on usage history of battery replacing apparatus 10, etc.

Communication unit 23 communicates with battery replacing apparatus 10, heater 30, and charger 40, for example. Communication unit 23 may also be allowed to access the Internet through communications with an external web server or the like. Communication unit 23 can also communicate with communications equipment (not shown) mounted on vehicle 200.

Heater 30 raises the temperature of battery pack 101 included in battery replacing apparatus 10. Heater 30 can raise temperatures of multiple battery packs 101 simultaneously. Processor 21 of controller 20 controls when heater 30 starts raising the temperature of battery pack 101. Note that, while Fig. 1 illustrates heater 30 being disposed in shed 11, the location where heater 30 is disposed is not limited to this example.

Charger 40 charges battery pack 101 included in battery replacing apparatus 10. Charger 40 can charge multiple battery packs 101 simultaneously. Processor 21 of controller 20 controls when charger 40 starts charging battery pack 101. Note that, while Fig. 1 illustrates charger 40 being disposed in shed 11, the location where charger 40 is disposed is not limited to this example.

In a conventional system, while when to charge a battery pack is set based on a predicted demand or availability of the battery pack, when to raise the temperature of the battery pack is not taken into account. As the temperature of the battery pack is raised too sooner than battery replacement, the battery pack is at a high temperature for an extended period of time, facilitating the deterioration of the battery pack.

Thus, in the present embodiment, controller 20 (processor 21) sets a start-of-raising-temperature time t1 at which the heater 30 starts raising the temperature of battery pack 101, based on usage status information of battery replacing apparatus 10 and information regarding the outdoor air temperature. Note that the start-of raising-temperature time t1 is one example of a "first time" according to the present disclosure.

In the present embodiment, controller 20 (processor 21) also sets a start-of-charging time t2 at which the charger 40 starts charging battery pack 101, based on the usage status information of battery replacing apparatus 10. Note that the start-of-charging time t2 is one example of a "second time" according to the present disclosure.

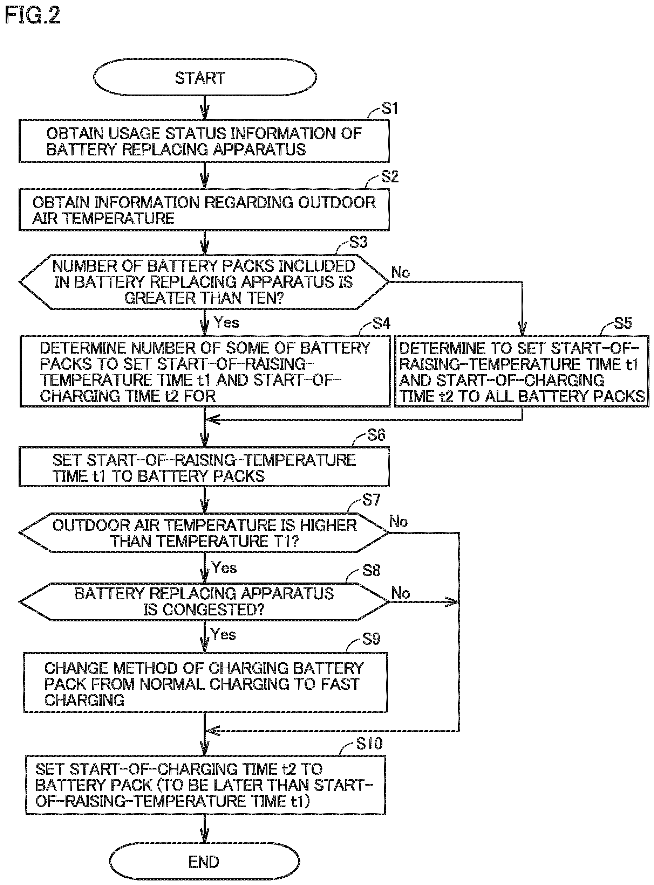

The status of usage of battery replacing apparatus 10 includes the current status of usage of battery replacing apparatus 10. The information regarding the outdoor air temperature includes information on the current outdoor air temperature. Referring to the control flow of Fig. 2, a control at battery replacing system 100 are now described in detail.

### <Control Flow of Battery Replacing System>

Referring to Fig. 2 and the subsequent figures, a control flow of battery replacing system 100 is now described. The control shown in Fig. 2 is performed by controller 20 (processor 21). Note that the control flow shown in Fig. 2 may be repeated for each predetermined control cycle.

In step S1, controller 20 obtains the usage status information of battery replacing apparatus 10. Specifically, the usage status information of battery replacing apparatus 10 may include information on the current congestion level of battery replacing apparatus 10 which is based on the availability of battery replacing apparatus 10. The usage status information of battery replacing apparatus 10 may also include information on the current congestion level of battery replacing apparatus 10 which is based on the number of vehicles captured by camera 12b (Fig. 1), for example. The usage status information of battery replacing apparatus 10 may also include information as to whether battery replacing apparatus 10 is currently in use.

The usage status information of battery replacing apparatus 10 may also include information on the current congestion level of battery replacing apparatus 10 which is based on the number of people using battery replacing apparatus 10, which is predicted using a trained model. The trained model may be generated by a machine-learning technology, such as deep learning.

In step S2, controller 20 obtains the information regarding the outdoor air temperature. Specifically, the information regarding the outdoor air temperature may include information on the current outdoor air temperature which is based on air-temperature information which is obtained through the Internet or the like via communication unit 23. The information regarding the outdoor air temperature may also include the information on the current outdoor air temperature based on a detection value of an air temperature sensor (no shown) included in battery replacing apparatus 10.

In step S3, controller 20 determines if the number of battery packs 101 included in battery replacing apparatus 10 is greater than ten. If the number of battery packs 101 is greater than ten (Yes in S3), the process proceeds to step S4. If the number of battery packs 101 is less than or equal to ten (No in S3), the process proceeds to step S5. Note that the threshold being ten is one example of a "predetermined number" according to the present disclosure. The threshold may be other than ten.

In step S4, controller 20 determines the number of some of battery packs 101 to set start-of-raising-temperature time t1 and start-of-charging time t2 for. Specifically, the controller 20 determines the number of battery packs 101 to set start-of raising-temperature time t1 and start-of-charging time t2 for, based on the status of usage (the current congestion level) of battery replacing apparatus 10. A specific method of the determination will be described below.

Note that each battery pack 101 in battery replacing apparatus 10 may be given a priority indicating an order in which the start-of-raising-temperature time t1 and start-of-charging time t2 are set to battery pack 101. For example, if the number of battery packs 101 determined in step S4 is five, five battery packs 101 having the first to fifth priorities may be selected as those to be set start-of-raising-temperature time t1 and start-of-charging time t2 for. This order (priority) may be updated (moved up) each time the number of battery packs 101 included in battery replacing apparatus 10 decreases through battery replacement.

In step S5, controller 20 determines to set start-of-raising-temperature time t1 and start-of-charging time t2 to each of all the battery packs 101 included in battery replacing apparatus 10.

In step S6, controller 20 sets start-of-raising-temperature time t1 to battery packs 101. In other words, the start-of-raising-temperature times t1 are set to the number of battery packs 101 corresponding to step S4 or S5. A specific method of the setting will be described below.

In step S7, controller 20 determines whether the outdoor air temperature is higher than a temperature T1 (e.g., 25 degrees Celsius). Controller 20 uses the information obtained in step S2 to determine whether the current outdoor air temperature is higher than temperature T1. If the outdoor air temperature is higher than temperature T1 (Yes in S7), the process proceeds to step S8. If the outdoor air temperature is less than or equal to temperature T1 (No in S7), the process proceeds to step S10.

In step S8, controller 20 determines whether battery replacing apparatus 10 is congested. For example, if the current congestion level of battery replacing apparatus 10 calculated in step S1 is higher than a predetermined threshold, controller 20 determines that the battery replacing apparatus 10 is congested. If battery replacing apparatus 10 is determined to be congested (Yes in step S8), the process proceeds to step S9. If battery replacing apparatus 10 is determined to be not congested (No in step S8), the process proceeds to step S10.

In step S9, controller 20 changes the method of charging battery pack 101 by charger 40 (the charging scheme) from normal charging to fast charging. For example, controller 20 may transmit a signal to charger 40 to switch the charging circuit of charger 40 to one for fast charging.

In step S10, controller 20 sets start-of-charging time t2 to battery pack 101. Specifically, controller 20 sets start-of-charging time t2, based on the method of charging by charger 40 (the charging scheme) and the status of usage (the current congestion level) of battery replacing apparatus 10. Note that the controller 20 sets start-of-charging time t2 so that the start-of-charging time t2 is later than start-of-raising-temperature time t1. This allows battery pack 101 to be charged while the temperature thereof is being raised, thereby streamlining the charging process, at which time the controller 20 may change start-of raising-temperature time t1 for adjustment. A specific method of setting start-of-charging time t2 will be described below.

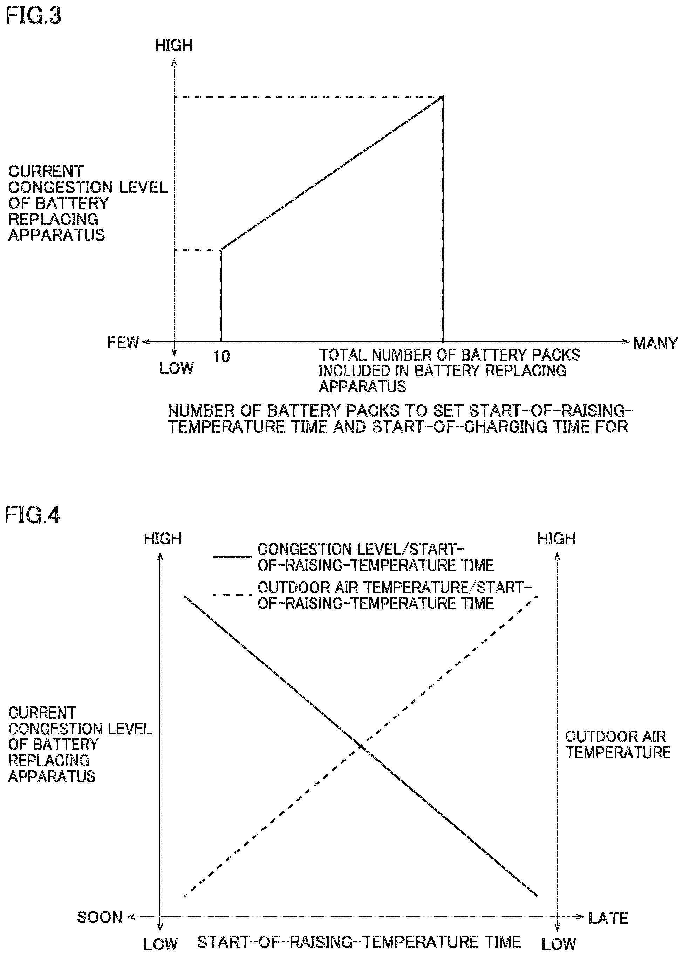

Fig. 3 is a diagram showing details of the control in step S4 of Fig. 2. The greater the current congestion level of battery replacing apparatus 10 is, the more the controller 20 increases the number of battery packs 101 to set start-of raising-temperature time t1 and start-of-charging time t2 for. Note that this number may be greater than or equal to ten and less than or equal to the total number of battery packs 101 included in battery replacing apparatus 10. While Fig. 3 illustrates that this number increases linearly with an increase in congestion level of battery replacing apparatus 10, the trend of increase in this number is not limited to this example. For example, this number may increase quadratically to the increase in congestion level of battery replacing apparatus 10.

Fig. 4 is a diagram showing details of the control in step S6 of Fig. 2. The higher the current congestion level of battery replacing apparatus 10 is, the controller 20 sets a sooner time to raise the temperature of battery pack 101 (the solid line), and the higher the outdoor air temperature is, the controller 20 sets a later time to raise the temperature of battery pack 101 (the dashed line). While Fig. 4 illustrates that the time to start raising the temperature of battery pack 101 changes linearly to the congestion level of battery replacing apparatus 10 and the outdoor air temperature, the trend of change in time to start raising the temperature of battery pack 101 is not limited to this example. For example, the time to start raising the temperature of battery pack 101 may change quadratically to at least one of the congestion level of battery replacing apparatus 10 and the outdoor air temperature.

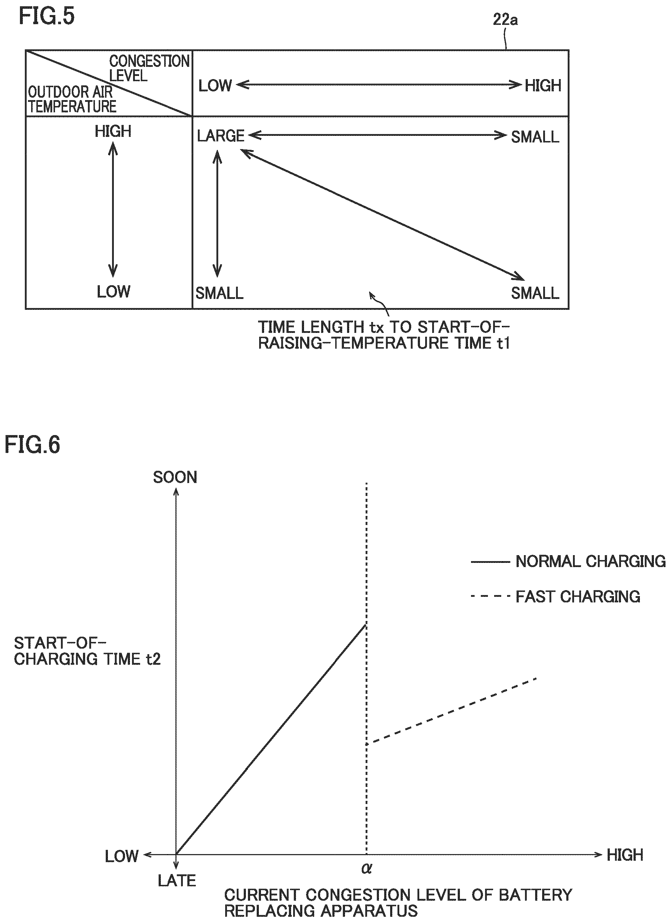

Memory 22 (Fig. 1) also stores a table 22a indicating the relationship between the current congestion level of battery replacing apparatus 10 and the current outdoor air temperature and between the current congestion level of battery replacing apparatus 10 and a time length tx to start-of-raising-temperature time t1. Fig. 5 is a diagram illustrating one example of table 22a. Controller 20 refers to the congestion level of battery replacing apparatus 10, the outdoor air temperature, and table 22a to calculate time length tx to start-of-raising-temperature time t1. Controller 20, then, adds time length tx, calculated from table 22a, to the current time to calculate start-of raising-temperature time t1. In table 22a, time length tx is shorter the further to the right. In table 22a, time length tx is shorter the further to the bottom. In other words, time length tx is shorter in table 22a the further to the bottom right. Note that, in practice, time length tx is set in a matrix. However, for simplification, Fig. 5 does not show a specific indication of time length tx.

Fig. 6 is a diagram showing details of the control at step S10 of Fig. 2. The higher the current congestion level of battery replacing apparatus 10 is, the controller 20 sets a sooner start-of-charging time t2. While Fig. 6 illustrates that the start-of-charging time t2 changes linearly to the congestion level of battery replacing apparatus 10, the trend of change in start-of-charging time t2 is not limited to this example. For example, the start-of-charging time t2 may change quadratically to the congestion level of battery replacing apparatus 10.

If the current congestion level of battery replacing apparatus 10 is greater than or equal to a predetermined threshold α, controller 20 switches the method of charging battery pack 101 from normal charging to fast charging. If the current congestion level of battery replacing apparatus 10 decreases from greater than or equal to threshold α to less than the threshold α, controller 20 switches the method of charging battery pack 101 from fast charging to normal charging.

If the method of charging battery pack 101 is fast charging, controller 20 reduces the advancement of start-of-charging time t2 (the slope of the solid line of Fig. 6) relative to an increase in congestion level of battery replacing apparatus 10, as compared to when the method of charging battery pack 101 is normal charging.

As described above, in the present embodiment, based on the usage status information of battery replacing apparatus 10 and the information regarding the outdoor air temperature, controller 20 sets start-of-raising-temperature time t1 at which the heater 30 starts raising the temperature of battery pack 101. This can raise the temperature of battery pack 101 to the set temperature at a right moment, as compared to setting the time to raise the temperature of battery pack 101, without taking into account the outdoor air temperature. As a result, prolonging of the period of time during which the battery pack 101 has a high temperature can be inhibited. This can also inhibit deterioration of battery pack 101. Moreover, since the status of usage of battery replacing apparatus 10 is taken into account too, the deterioration of battery pack 101 can better be inhibited.

In the above embodiment, start-of-raising-temperature time t1 of battery pack 101 is set based on the current congestion level of battery replacing apparatus 10. However, the present disclosure is not limited thereto. For example, start-of raising-temperature time t1 may be set based on the future congestion level of battery replacing apparatus 10 (the current congestion level may be included).

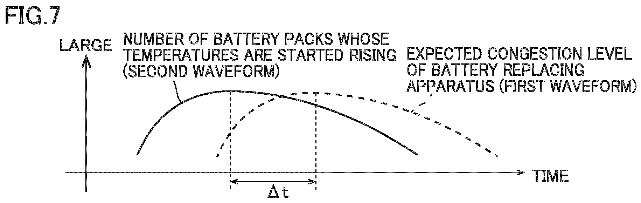

In the example shown in Fig. 7, the start-of-raising-temperature time of battery pack 101 is set based on the prediction of the future congestion level of battery replacing apparatus 10. Specifically, the time course (the solid waveform) (hereinafter, referred to as a second waveform) of the number of battery packs 101 that starts raising the temperatures in the future is calculated based on the time course (the dashed waveform) (hereinafter, referred to as a first waveform) of a predicted value of the future congestion level of battery replacing apparatus 10.

In the example shown in Fig. 7, the second waveform is shifted by time Δt from the first waveform. For example, time Δt may be set based on the outdoor air temperature. For example, the higher the outdoor air temperature is, the shorter the time Δt may be set. In this case, the start-of-raising-temperature times of more battery pack 101 are set to be later.

In this case, the outdoor air temperature may be the current outdoor air temperature or a predicted value of the future outdoor air temperature. The predicted value of the future outdoor air temperature may be, for example, an average of predicted values of the outdoor air temperature of a day or a predicted value of the outdoor air temperature at each time. Note that, if a predicted value of the outdoor air temperature at each time is employed, the amount of shift (Δt) may be different for each time. In this case, the second waveform is not limited to have the same shape as the first waveform. Moreover, the future outdoor air temperature may be predicted based on, for example, seasonal information, information as to whether it is daytime or nighttime, and weather information, etc.

A time at which the charging of battery pack 101 is started may be set in the same manner as described above with respect to Fig. 7. In this case, the amount of shift corresponding to time Δt may be a fixed value.

Start-of-raising-temperature time t1 may also be set based on the past congestion level of battery replacing apparatus 10. For example, start-of-raising-temperature time t1 may be set based on information on a congestion level for each time slot and each day of a week, etc. in a past predetermined period of time (e.g., one month earlier than the present time) of battery replacing apparatus 10. Start-of-raising-temperature time t1 may be set based on such past information by, for example, a trained model generated by a machine-learning technology such as deep learning.

In the above embodiment, start-of-raising-temperature time t1 of battery pack 101 is set based on the current outdoor air temperature. However, the present disclosure is not limited thereto. Similarly to the description with respect to Fig. 7, etc., start-of-raising-temperature time t1 may be set based on the future and past outdoor air temperatures of battery replacing apparatus 10.

In the above embodiment, the higher the congestion level of battery replacing apparatus 10 is, the sooner the start-of-raising-temperature time t1 is. However, the present disclosure is not limited thereto. The higher the congestion level of battery replacing apparatus 10 is, the later the start-of-raising-temperature time t1 may be.

In the above embodiment, the method of charging is switched from normal charging to fast charging, based on the status of usage of battery replacing apparatus 10. However, the present disclosure is not limited thereto. The method of charging may be fixed to normal charging (or fast charging).

In the above embodiment, start-of-raising-temperature time t1 and start-of-charging time t2 are set so that the temperature of battery pack 101 is raised sooner than when battery pack 101 is charged. However, the present disclosure is not limited thereto. Start-of-raising-temperature time t1 and start-of-charging time t2 may be set so that the battery pack 101 is charged at the same time or sooner than when the temperature of battery pack 101 is raised.

In the above embodiment, the number of battery packs 101 to set start-of-raising-temperature time t1 and start-of-charging time t2 for is set based on the status of usage of battery replacing apparatus 10. However, the present disclosure is not limited thereto. The number of battery packs 101 to set start-of-raising-temperature time t1 and start-of-charging time t2 for may be constant, irrespective of the status of usage of battery replacing apparatus 10.

In the above embodiment, if the number of battery packs 101 included in battery replacing apparatus 10 is less than or equal to a predetermined number (ten in the above embodiment), start-of-raising-temperature time t1 and start-of-charging time t2 are set to every battery pack 101. However, the present disclosure is not limited thereto. Start-of-raising-temperature time t1 and start-of-charging time t2 may be set to every battery pack 101, irrespective of the number of battery packs 101 included in battery replacing apparatus 10.

In the above embodiment, controller 20 (processor 21) performs the processes described in the above embodiment. However, the present disclosure is not limited thereto. For example, each process may be performed by a different controller (processor). Moreover, a first controller (a first processor) that can perform multiple processes, and a second controller (a second processor) that performs processes different from those performed by the first controller (the first processor) may be provided.

In the above embodiment, table 22a is used to calculate start-of raising-temperature time t1. However, the present disclosure is not limited thereto. For example, a predetermined mathematical formula may be used to calculate start-of-raising-temperature time t1, based on the start-of-raising-temperature time of battery pack 101 depending on a congestion level of battery replacing apparatus 10, and the start-of-raising-temperature time of battery pack 101 depending on the outdoor air temperature. In this case, the congestion level of battery replacing apparatus 10 and the outdoor air temperature may be weighted differently.

In the above embodiment, the number of battery packs 101 to which the start-of-raising-temperature time t1 and start-of-charging time t2 are to be set is determined based on the congestion level of battery replacing apparatus 10. However, the present disclosure is not limited thereto. For example, start-of-raising-temperature time t1 and start-of-charging time t2 may be set only for the same number of battery packs 101 as the number of vehicles reserving the use of battery replacing apparatus 10.

In the above embodiment, start-of-charging time t2 is set based on the method of charging by charger 40 (the charging scheme) and the status of usage (the current congestion level) of battery replacing apparatus 10. However, the present disclosure is not limited thereto. For example, start-of-charging time t2 may be set based on the SOC of battery pack 101 too.

Note that the above embodiment and various variations thereof may be combined.

While the embodiment according to the present disclosure has been described above, the presently disclosed embodiment should be considered in all aspects illustrative and not restrictive. The scope of the present disclosure is defined by the appended claims. All changes which come within the meaning and range of equivalency of the appended claims are to be embraced within their scope.

## Claims

1. A battery replacing system (100), comprising:
a battery replacing apparatus (10) including at least one spare battery (101) replaceable with a vehicle battery (201) mounted on the vehicle (200);
a heater (30) that raises a temperature of the at least one spare battery; and
at least one controller (20), wherein
any one of the at least one controller sets a first time (t1) at which the heater starts raising the temperature of the at least one spare battery, based on usage status information of the battery replacing apparatus and information regarding an outdoor air temperature.

2. The battery replacing system according to claim 1, wherein
the any one of the at least one controller
sets the first time so that higher a congestion level of the battery replacing apparatus is, sooner the heater starts raising the temperature, and
sets the first time so that higher the outdoor air temperature is, later the heater starts raising the temperature.

3. The battery replacing system according to claim 1 or 2, further comprising
a charger (40) that charges the at least one spare battery, wherein
the any one of the at least one controller sets a second time (t2) at which the charger starts charging the at least one spare battery, based on the usage status information of the battery replacing apparatus.

4. The battery replacing system according to claim 3, wherein
the any one of the at least one controller changes a method of charging by the charger from normal charging to fast charging, based on the usage status information of the battery replacing apparatus, and
the any one of the at least one controller sets the second time based on the method of charging.

5. The battery replacing system according to claim 3, wherein
the any one of the at least one controller sets the first time and the second time so that the heater raises the temperature sooner than when the charger charges the at least one spare battery.

6. The battery replacing system according to claim 1 or 2, wherein
the at least one spare battery includes a plurality of spare batteries (101), and
the any one of the at least one controller sets a number of spare batteries to set the first time for among the plurality of spare batteries, based on the usage status information of the battery replacing apparatus.

7. The battery replacing system according to claim 6, wherein
when a total number of the plurality of spare batteries is greater than a predetermined number, the any one of the at least one controller sets the first time for some of the plurality of spare batteries, based on the usage status information of the battery replacing apparatus.
